# EUROPÄISCHE PATENTSCHRIFT

(11) **EP 2 191 158 B1**
(45) Veröffentlichungstag und Bekanntmachung des Hinweises auf die Patenterteilung: **13.04.2011**
(21) Anmeldenummer: 08801575.5
(22) Anmeldetag: 14.08.2008
(51) Int. Cl.: F16D 48/02, F16D 48/06

(54) **ANSTEUERUNG EINER KUPPLUNG**
ACTUATION MEANS FOR A CLUTCH
COMMANDE D'UN EMBRAYAGE

(30) Priorität: 20.09.2007 DE 102007045056
(43) Veröffentlichungstag der Anmeldung: 02.06.2010
(73) Patentinhaber: Volkswagen Aktiengesellschaft, 38436 Wolfsburg (DE)
(72) Erfinder: KRUSE, Georg, 38518 Gifhorn (DE); MEYER, Roland, 72622 Nürtingen (DE); NOVOTNY, Markus, 34286 Zierenberg (DE)
(86) Internationale Anmeldenummer: PCT/EP2008/006675
(87) Internationale Veröffentlichungsnummer: WO 2009/039918

(56) Entgegenhaltungen:
- DE-A1- 3 732 427
- DE-A1- 19 633 420
- US-A- 2 158 440

## Beschreibung

Die Erfindung betrifft eine Ansteuerung einer Kupplung, insbesondere für einen Hybridantrieb, mit einem Geberzylinder, dessen Innenraum von einem Geberkolben in einen Nehmerölraum und einen Geberölraum geteilt wird, wobei der Nehmerölraum über ein Ventil in einer ersten Ventilstellung mit einer Tankleitung zu einem Ölreservoir und in einer zweiten Ventilstellung mit einer Druckleitung von dem Ölreservoir verbunden ist, und wobei der Geberölraum über eine Arbeitsleitung mit dem Ölraum eines Nehmerzylinders und über eine Ausgleichsleitung in Abhängigkeit von der Stellung des Geberkolbens mit einem Ausgleichsbehälter verbunden ist.

Die Erfindung betrifft weiterhin ein Verfahren zur Ansteuerung einer Kupplung, insbesondere für einen Hybridantrieb, bei dem zur Betätigung eines Arbeitskolbens in einem einer Kupplung zugeordneten Nehmerzylinder ein Nehmerölraum eines Geberzylinders über ein Ventil, das den Nehmerölraum mit einer Druckleitung eines Ölreservoirs verbindet, mit Öl gefüllt wird, wobei das Öl durch Verschieben eines Geberkolbens aus einem Geberölraum des Geberzylinders über eine Arbeitsleitung in einen Ölraum des Nehmerzylinders gedrückt wird und den Arbeitskolben in seine Betätigungsstellung verschiebt, wobei zur Rückstellung des Arbeitskolbens der Nehmerölraum des Geberzylinders durch das Ventil von der Druckleitung getrennt und mit einer Tankleitung verbunden und entleert wird, wobei in der Ausgangsstellung des Geberkolbens der Geberölraum über einen Ausgleichsbehälter entlüftet und fehlendes Ölvolumen ausgeglichen wird.

Hybridantriebe verfolgen neben der Reduzierung des Verbrauches und des Schadstoffausstoßes ebenso Ziele Komfortsteigerung, Performancesteigerung oder emissionsfreies Fahren. Zum Erreichen einiger dieser Ziele ist es notwendig, den Verbrennungsmotor abzuschalten und rein elektrisch zu fahren (z.B.: emissionsfreies Fahren). Bei der parallelen Architektur eines Hybrid-Antriebsstranges ist es hierzu erforderlich, eine zusätzliche Kupplung zwischen Verbrennungsmotor und E-Maschine anzuordnen, um den Verbrennungsmotor vom Antriebsstrang zu trennen. Diese Kupplung muss einer Fahrstrategie entsprechende, in Abhängig des Betriebszustandes angesteuert werden.

Bei einer hydraulischen Ansteuerung einer Kupplung, wie sie beispielsweise aus der DE 43 09 901 A1 bekannt ist, wird ein Geberzylinder verwendet, der eine definierte Ölmenge in einen Nehmerzylinder verschiebt. Dieser Nehmerzylinder betätigt schließlich beispielsweise als Zentralausrücker eine Kupplung. Am Geberzylinder wird in der hinteren Endlage, d.h. ohne Betätigung, eine hydraulische Verbindung zu einem Ausgleichsbehälter freigegeben. Über diese Verbindung wird das System zum einen während des regulären Betriebs entlüftet, zum anderen erfolgt über diese Verbindung eine selbsttätige Nachstellung der Kupplung mit zunehmendem Verschleiß. Für eine automatisierte Betätigung der Kupplung ist eine hydraulische Steuerung notwendig. Durch diesen Umstand entstehen zwei hydraulische Kreisläufe: die hydraulische Ansteuerung und die hydraulische Kupplungsbestätigungsstrecke mit zugehörigem Ausgleichsbehälter.

Nachteilig bei der bekannten Ansteuerung ist, dass bei einer zusätzlichen Kupplung für die gesamte hydraulische Betätigung der entsprechende zusätzliche Bauraum vorzuhalten ist. Durch den zusätzlichen Ausgleichsbehälter entsteht hinsichtlich der Wartung ein gewisser Mehraufwand, beispielsweise die regelmäßige Kontrolle des Füllstandes im Ausgleichsbehälter. Weiterhin ist aus der DE 196 33 420 A1 ein Verfahren und eine Vorrichtung zur hydraulischen Betätigung einer Kupplung bekannt. Dabei sind der Nehmerölraum und der Geberölraum über ein gemeinsames Proportionalventil mit einem Ölreservoir verbunden. Nachteilig dabei ist, dass zwar ein Ausgleich des Kupplungsverschleißes durch eine Verbindung des Geberölraums über das Proportionalventil zu der Tankleitung des Ölreservoirs möglich ist, dass aber durch das Fehlen eines eigenen Ausgleichsbehälters eine Betriebsentlüftung allenfalls bedingt möglich ist.

Aufgabe der vorliegenden Erfindung ist es daher, eine Ansteuerung sowie ein Verfahren zur Ansteuerung einer Kupplung vorzuschlagen, das ein möglichst kompaktes und wartungsarmes System ermöglicht. Dabei soll sowohl die Funktionalität der Betriebsentlüftung als auch der Ausgleich des Kupplungsverschleißes erhalten bleiben.

Die Aufgabe bzgl. der Ansteuerung einer Kupplung wird in Verbindung mit dem Oberbegriff des Anspruches 1 dadurch gelöst, dass das Ventil in seiner ersten Stellung den Nehmerölraum über eine Rückleitung mit dem Ausgleichsbehälter verbindet und dass der Ausgleichsbehälter ein Ausgleichsvolumen aufweist, das an seinem höchsten Punkt einen Überlauf aufweist, der mit der Tankleitung verbunden ist..

Dadurch, dass der Ausgleichsbehälter einen Überlauf aufweist, der mit der Tankleitung verbunden ist und der Nehmerölraum nicht direkt mit der Tankleitung sondern über das Ausgleichsvolumen bzw. den Ausgleichsbehälter mit dem Ölreservoir verbunden ist, ist es möglich, den Ausgleichsbehälter bzw. sein Ausgleichsvolumen wesentlich kleiner als im Stand der Technik auszubilden. Durch die Integration des Ausgleichsbehälters bzw. des Ausgleichsvolumens in einen hydraulischen Kreislauf, wird mit jeder Betätigung des Geberzylinders das Ausgleichsvolumen nachgefüllt. Zugleich bleibt die Funktionalität der Betriebsentlüftüng als auch der Ausgleich des Kupplungsverschleißes erhalten. Zusätzlich ist von Vorteil, dass sich das System bei der Erstinbetriebnahme oder nach Wartungsarbeiten an der hydraulischen Kupplungsbetätigungsstrecke durch mehrmalige Betätigung selbstständig mit Hydrauliköl befüllen lässt.

Gemäß einer bevorzugten Ausführungsform der Erfindung sind der Geberzylinder, der Ausgleichsbehälter und das Ventil in einem Gehäuse angeordnet und bilden eine Ansteuereinheit. Damit wird eine kompakte und wartungsarme Ansteuereinheit erreicht, die für die beiden Kupplungen eines Hybridantriebes gleich ausgebildet sein kann.

Nach einer weiteren bevorzugten Ausführungsform der Erfindung weist die Ansteuereinheit zur Verbindung mit dem Nehmerzylinder einen externen Arbeitsanschluss, zur Verbindung mit dem Ölreservoir bzw. der hydraulischen Steuerung einen externen Tankanschluss und einen externen Druckanschluss sowie zur Verbindung eines Steuergerätes mit einer Ventilansteuerung des Ventils einen Steueranschluss auf. Damit wird eine einfache Montage bzw. ein einfacher Austausch der Ansteuereinheit ermöglicht.

Nach einer weiter bevorzugten Ausführungsform der Erfindung weist bei gleich hohem Druckniveau zu beiden Seiten des Geberzylinders der Geberkolben zum Nehmerölraum und zum Geberölraum hin gleichgroße hydraulisch wirksame Kolbenflächen auf. Bei einem unterschiedlichen Druckniveau zu beiden Seiten des Geberzylinders kann der Geberkolben zum Nehmerölraum und zum Geberölraum hin unterschiedlich große hydraulisch wirksame Kolbenflächen aufweisen. Das Verhältnis der Kolbenflächen auf Geber- und Nehmerseite stellt dabei eine Drucküber- bzw. Druckuntersetzung dar.

Gemäß einer weiteren bevorzugten Ausführungsform der Erfindung ist zwischen Geberkolben und Geberzylinder in einer Nut eine Dichtung so angeordnet, dass in einer Endstellung des Geberkolbens bei entleertem Nehmerölraum die Öffnung der Ausgleichsleitung zum Geberölraum freiliegt, wobei in einem der Dichtung zum Geberölraum hin vorgelagerten Bereich zwischen Kolbenumfang und benachbarter Geberzylinderwandung ein dem Geberölraum mit der Öffnung der Ausgleichsleitung verbindender Durchlass gebildet wird. In dieser Stellung wird über den Durchlass die Entlüftung des Geberölraums zum Ausgleichsvolumen hin bzw. kann ein durch Verschleiß der Kupplung entstehendes Differenzvolumen im Geberölraum mit Öl aus dem Ausgleichsbehälter aufgefüllt bzw. ausgeglichen werden.

Die Dichtung, die den Kolben beim Verschieben gegenüber dem Geberölraum abdichtet, kann sowohl in einer umlaufenden Nut des Geberkolbens als auch in einer umlaufenden Nut der Geberzylinderwandung angeordnet sein.

Die Aufgabe das Verfahren zur Ansteuerung einer Kupplung betreffend, wird in Verbindung mit dem Oberbegriff des Anspruches 9 dadurch gelöst, dass der Nehmerölraum zum Entleeren über das Ventil mit dem Ausgleichsbehälter verbunden und dieser aufgefüllt wird, wobei überflüssiges Öl über einen Überlauf des Ausgleichsbehälters über die mit dem Überlauf verbundene Tankleitung dem Ölreservoir wieder zugeführt wird.

Dadurch wird beim Rückhub des Geberkolbens das Ansteuerölvolumen vom Nehmerölraum in den Ausgleichsbehälter geleitet und überschüssiges Öl fließt über den Überlauf zurück in das Ölreservoir der hydraulischen Steuerung. Das Ausgleichsvolumen wird also mit jeder Betätigung des Geberkolbens nachgefüllt. Über den Ausgleichsbehälter ist gleichzeitig eine Betriebsentlüftung der Kupplungsbetätigungsstrecke gewährleistet. Durch den Überlauf und die Verbindung zu dem Ölreservoir ist es möglich, den Ausgleichsbehälter bei gleicher Funktion gegenüber den bekannten Ausgleichsbehältern relativ klein, d.h. mit geringen Ausgleichsvolumen auszubilden. Eine Kontrolle des Füllstandes des Ausgleichsbehälters erübrigt sich durch das erfindungsgemäße Verfahren.

Gemäß einer weiteren Ausführungsform der Erfindung wird bei einer vollständig leeren Kupplungsbetätigungsstrecke zur vollständigen Auffüllung von Geberölraum und Ausgleichsbehälter der Geberzylinder mehrmals betätigt. Damit lässt sich das System bei der Erstinbetriebnahme oder nach Wartungsarbeiten an der hydraulischen Kupplungsbetätigungsstrecke selbstständig mit Hydrauliköl befüllen.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

In den Zeichnungen zeigen:

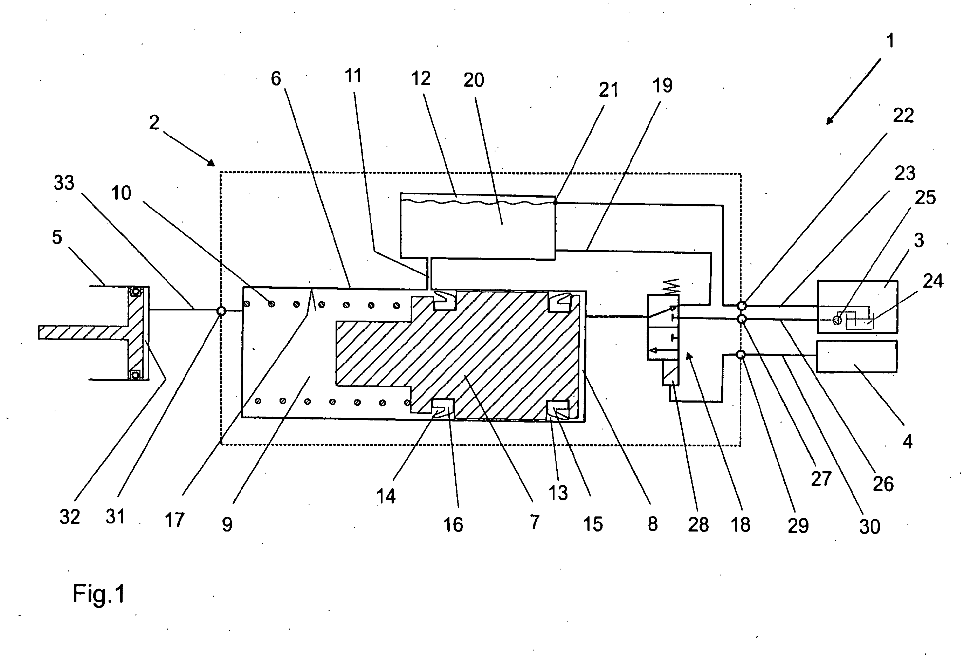

- Fig. 1: eine schematische Darstellung einer Ansteuerung einer Kupplung mit integriertem Ausgleichsbehälter und gemeinsamem Ölkreislauf,
- Fig. 2: eine schematische Darstellung einer Ansteuerung einer Kupplung mit einem Geberzylinder mit gestuftem Geberkolben,
- Fig. 3: eine schematische Darstellung einer Ansteuerung einer Kupplung mit einem Geberzylinder mit Geberkolben und vorgelagertem Pilotkolben,
- Fig. 4: eine schematische Darstellung einer Ansteuerung einer Kupplung mit einem Ringkanal im Geberzylinder und
- Fig. 5: eine schematische Darstellung einer Ansteuerung einer Kupplung mit einem Geberzylinder und einer in einer umlaufenden Nut der Geberzylinderwandung angeordneter Dichtung.

Die Ansteuerung 1 einer Kupplung besteht im Wesentlichen aus einer Ansteuereinheit 2, einer hydraulischen Steuerung 3, einem Steuergerät 4 und einem Nehmerzylinder 5 zur Betätigung einer Kupplung.

Die Ansteuereinheit 2 besteht aus einem Geberzylinder 6, dessen Innenraum von einem längs verschieblichen Geberkolben in einen Nehmerölraum 8 und einen Geberölraum 9 unterteilt wird. Im Geberölraum 9 ist eine Druckfeder 10 angeordnet, die den Geberkolben 7 im drucklosen Zustand in seine Ausgangsstellung im Nehmerölraum 8 drückt. In der Ausgangsstellung des Geberkolbens 7 ist der Geberölraum über eine Ausgleichsleitung 11 mit einem Ausgleichsbehälter 12 verbunden. Der Geberkolben 7 weist zum Nehmerölraum 8 und zum Geberölraum 9 hin jeweils ein Ringnut 13, 14 auf, in der jeweils eine Dichtung 15, 16 zur Abdichtung gegenüber der dem Kolben benachbarten Zylinderinnenwandung 17 angeordnet ist. Neben dem Geberzylinder 6 und dem Ausgleichsbehälter 12 ist in der Ansteuereinheit 2 ein Ventil 18 angeordnet. Das Ventil 18 verbindet in einer ersten Stellung den Nehmerölraum 8 über eine Rückleitung 19 mit dem Ausgleichsbehälter 12.

Der Ausgleichsbehälter 12 weist ein Ausgleichsvolumen 20 auf, das an seinem höchsten Punkt einen Überlauf 21 aufweist, der über einen Tankanschluss 22 mit der Tankleitung 23 zu einem Ölreservoir 24 der hydraulischen Steuerung 3 verbunden ist. In einer zweiten Stellung verbindet das Ventil 18 eine von dem Ölreservoir 24 bzw. der hydraulischen Steuerung 3 gespeiste Druckleitung 26 über einen externen Druckanschluss 27 der Ansteuereinheit 2 mit dem Nehmerölraum 8. Das Ventil 18 wird von einer Ventilansteuerung 28, die über einen externen Ventilsteueranschluss 29 der Ansteuereinheit 2 mit dem Steuergerät 4 über eine Steuerleitung 30 verbunden ist, gesteuert.

Der Geberölraum 9 ist über einen externen Arbeitsanschluss 31 der Ansteuereinheit 2 mit einer zu einem Ölraum 32 des Nehmerzylinders 5 führenden Arbeitsleitung 33 verbunden.

Bei einem Rückhub des Geberkolbens 7 wird das Ansteuerölvolumen vom Nehmerölraum 8 in der ersten Ventilstellung des Ventils 18 über die Rückleitung 19 in den Ausgleichsbehälter 12 geleitet. Dabei wird das Ausgleichsvolumen 20 aufgefüllt und überschüssiges Öl über den Überlauf 21 und die Tankleitung 23 in das Ölreservoir 24 der hydraulischen Steuerung 3 geleitet. Das Ausgleichsvolumen 20 bzw. der Ausgleichsbehälter 12 wird also mit jeder Betätigung des Geberkolbens 7 nachgefüllt. Über die Ausgleichsleitung 11 ist dabei eine Betriebsentlüftung der Kupplungsbetätigungsstrecke gewährleistet. Ein hinreichend großer Querschnitt der Ausgleichsleitung 11 als Verbindung zwischen Ausgleichsvolumen 20 und Geberölraum 9 gewährleistet die Funktion der selbstständigen Erst- und Wiederbefüllung durch mehrmalige Betätigung. Die Größe des Querschnitts der hydraulischen Verbindung bzw. der Ausgleichsleitung 11 ist dabei so gewählt, dass das Öl unerzwungen vom Ausgleichsvolumen 20 des Ausgleichsbehälters 12 in den Geberölraum 9 fließen kann.

Der Vorgang der Befüllung beginnt bei vollständig leerer Kupplungsbetätigungsstrecke mit der Ansteuerung des Geberkolbens 7 durch die hydraulische Steuerung 3. Im Rückhub des Geberkolbens 7 wird das Ansteuerölvolumen vom Nehmerölraum 8 in das Ausgleichsvolumen 20 verschoben und fließt in der Endlage des Geberkolbens 7 durch die Ausgleichsleitung 11 in den Geberölraum 9. Durch die nächste Betätigung wird das in den Geberölraum 9 gelaufene Öl in den Nehmerzylinder 5 verschoben. Der Nehmerzylinder 5 wird hierdurch teilweise mit Öl befüllt. Da sich die Ansteuereinheit 2 am höchsten Punkt des hydraulischen Systems befindet, wird im Rückhub Luft aus dem Nehmerzylinder 5 in den Geberölraum 9 des Geberzylinders 6 verschoben. Gleichzeitig wird wiederum das Ansteueröl vom Nehmerölraum 8 des Geberzylinders 6 in das Ausgleichsvolumen 20 bzw. den Ausgleichsbehälter 12 verschoben und fließt von hier in den Geberölraum 9. Es folgen weitere Betätigungen in geeigneter Anzahl bis der Nehmerzylinder 5 auf die oben beschriebene Weise vollständig befüllt, sowie der Geberölraum 9 entlüftet und der Ausgleichsbehälter 12 vollständig gefüllt ist. Durch die Anbindung des Ausgleichsvolumens 20 an den externen Tankanschluss 22 ist ebenso die Nachstellung der nicht dargestellten Kupplung mit zunehmendem Verschleiß gegeben. Durch Verschleiß des Kupplungsbelages kann die Kupplung zunehmend weiter einrücken als im Neuzustand. Hierdurch entsteht ein Differenzölvolumen, das aus dem Nehmerzylinder 5 herausgefördert werden muss, um die Kupplung vollständig zu schließen. Der Geberkolben 7 nimmt beim Rückhub das durch Kolbendurchmesser und Hub definierte Betätigungsölvolumen auf, das Differenzölvolumen entweicht nach Freigabe der hydraulischen Verbindung in das Ausgleichsvolumen 20 und von dort über den Überlauf 21 in das Ölreservoir 24 der hydraulischen Steuerung 3.

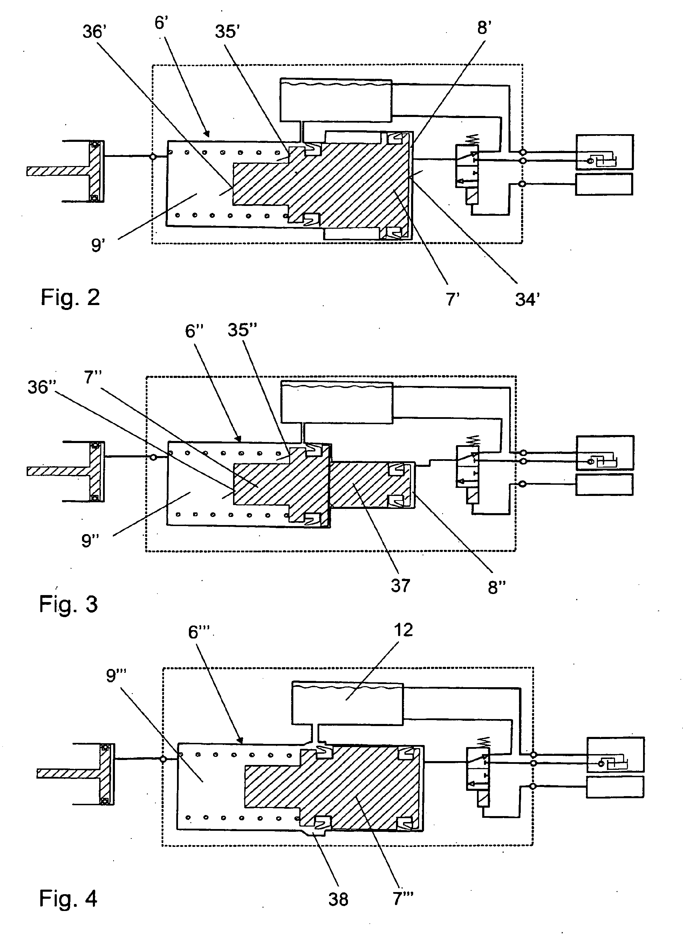

Entsprechend dem Ausführungsbeispiel von Figur 2 weist der Geberzylinder 6' einen gestuften Geberkolben 7' auf. Das Verhältnis der nehmerseitigen Kolbenfläche 34' zu den hydraulisch wirksamen geberseitigen Kolbenflächen 35', 36' ergibt dabei eine Druckübersetzung.

Nach dem Ausführungsbeispiel von Figur 3 ist dem Geberkolben 7" des Geberzylinders 6" zu dem Nehmerölraum 8" hin ein Pilotkolben 37 vorgelagert. Hierbei ergibt sich eine Druckuntersetzung.

Gemäß dem Ausführungsbeispiel von Figur 4 weist der Geberzylinder 6'" einen Ringkanal 38 auf, der einen ausreichenden Querschnitt der hydraulischen Verbindung zwischen dem Ausgleichsbehälter 12 und dem Geberölraum 9'" gewährleistet.

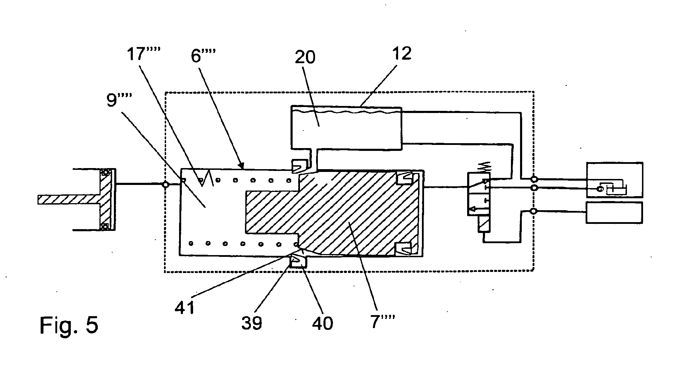

Entsprechend dem Ausführungsbeispiel von Figur 5 weist der Geberzylinder 6"" eine Ringnut 39 mit einer Dichtung 40 zur Abdichtung des Geberölraumes 9"" gegenüber dem Geberkolben 7"" auf. Der Geberkolben 7"" weist in seiner drucklosen Ausgangsstellung benachbart zur Dichtung 40 eine Abflachung 41 auf. Durch die Abflachung 41 soll ebenfalls ein ausreichender Querschnitt der hydraulischen Verbindung zwischen Ausgleichsvolumen 20 und Geberölraum 9"" gewährleistet werden.

### Bezugszeichenliste

- 1: Ansteuerung
- 2: Ansteuereinheit
- 3: Hydraulische Steuerung
- 4: Steuergerät
- 5: Nehmerzylinder
- 6, 6', 6", 6"', 6"": Geberzylinder
- 7', 7', 7", 7"": Geberkolben v. 6
- 8, 8', 8": Nehmerölraum v. 6
- 9, 9', 9", 9"', 9"": Geberölraum v. 6
- 10: Druckfeder
- 11: Ausgleichsleitung
- 12: Ausgleichsbehälter
- 13: Ringnut
- 14: Ringnut
- 15: Dichtung
- 16: Dichtung
- 17, 17"": Zylinderinhenwandung
- 18: Ventil
- 19: Rückleitung
- 20: Ausgleichsvolumen
- 21: Überlauf v. 20/12
- 22: Tankanschluss v. 2
- 23: Tankleitung
- 24: Ölreservoir
- 25: Pumpe
- 26: Druckleitung
- 27: ext. Druckanschluss v. 2
- 28: Ventilansteuerung
- 29: Ventilsteueranschluss v. 2
- 30: Steuerleitung
- 31: Arbeitsanschluss v. 2
- 32: Ölraum v. 5
- 33: Arbeitsleitung
- 34, 34', 34": nehmerseitige Kolbenfläche
- 35, 35', 35": geberseitige Kolbenfläche
- 36, 36', 36": geberseitige Kolbenfläche
- 37: Pilotkolben
- 38: Ringkanal
- 39: Ringnut v. 6""
- 40: Dichtung
- 41: Abflachung

## Patentansprüche

1. Ansteuerung einer Kupplung, insbesondere für einen Hybridantrieb, mit einem Geberzylinder (6, 6', 6", 6"', 6""), dessen Innenraum von einem Geberkolben (7, 7', 7", 7"', 7"") in einen Nehmerölraum (8, 8") und einen Geberölraum (9, 9"', 9"") geteilt wird, wobei der Nehmerölraum (8, 8") über ein Ventil (18) in einer ersten Ventilstellung mit einer Tankleitung (23) zu einem Ölreservoir (24) und in einer zweiten Ventilstellung mit einer Druckleitung (26) von dem Ölreservoir (24) verbunden ist, und wobei der Geberölraum (9,9',9",9"',9"") über eine Arbeitsleitung (33) mit dem Ölraum (32) eines Nehmerzylinders (5) und über eine Ausgleichsleitung (11) in Abhängigkeit von der Stellung des Geberkolbens (7, 7', 7", 7"', 7"") mit einem Ausgleichsbehälter (12) verbunden ist,
**dadurch gekennzeichnet,**
**dass** das Ventil (18) in seiner ersten Stellung den Nehmerölraum (8, 8") über eine Rückleitung (19) mit dem Ausgleichsbehälter (12) verbindet und
**dass** der Ausgleichsbehälter (12) ein Ausgleichsvolumen (20) aufweist, das an seinem höchsten Punkt einen Überlauf (21) aufweist, der mit der Tankleitung (23) verbunden ist.

2. Ansteuerung nach Anspruch 1, **dadurch gekennzeichnet, dass** der Geberzylinder (6, 6', 6", 6"', 6""), der Ausgleichsbehälter (12) und das Ventil (18) in einem Gehäuse angeordnet sind und eine Ansteuereinheit (2) bilden.

3. Ansteuerung nach Anspruch 2, **dadurch gekennzeichnet, dass** die Ansteuereinheit (2) zur Verbindung mit dem Nehmerzylinder (5) einen externen Arbeitsanschluss (31) zur Verbindung mit dem Ölreservoir (24) einen externen Tankanschluss (22) und einen externen Druckanschluss (27) sowie zur Verbindung eines Steuergerätes (4) mit einer Ventilansteuerung (28) des Ventils (18) einen Ventilsteueranschluss (29) aufweist.

4. Ansteuerung nach einem der Ansprüche 1 bis 3, **dadurch gekennzeichnet, dass** bei gleich hohem Druckniveau zu beiden Seiten des Geberzylinders (6, 6"', 6"")der Geberkolben (7, 7"', 7"') zum Nehmerölraum (8) und zum Geberölraum (9, 9"', 9"") hin gleich große hydraulisch wirksame Kolbenflächen (34, 35, 36) aufweist.

5. Ansteuerung nach einem der Ansprüche 1 bis 3 **dadurch gekennzeichnet, dass** der Geberkolben (6', 6") zum Nehmerölraum (8', 8") und zum Geberölraum (9', 9") hin unterschiedlich große hydraulisch wirksame Kolbenflächen (34', 34") aufweist.

6. Ansteuerung nach einem der Ansprüche 1 bis 5 **dadurch gekennzeichnet, dass** zwischen Geberkolben (7, 7', 7", 7"', 7"") und Geberzylinder (6, 6', 6", 6"', 6"") in einer Ringnut (13, 14, 39) eine Dichtung (15, 16, 40) so angeordnet ist, dass in einer Endstellung des Geberkolbens (7, 7', 7", 7"', 7"") bei entleertem Nehmerölraum (8, 8', 8") die Öffnung der Ausgleichsleistung (11) zum Geberölraum (9, 9', 9", 9"', 9"") freiliegt, wobei in einem der Dichtung (15, 16, 40) zum Geberölraum (9, 9', 9", 9"', 9"") hin vorgelagerten Bereich zwischen Kolbenumfang und benachbarter Zylinderinnenwandung (17) ein den Geberölraum (9, 9', 9", 9"', 9"") mit der Öffnung der Ausgleichsleitung (11) verbindender Durchlass gebildet wird.

7. Ansteuerung nach Anspruch 6, **dadurch gekennzeichnet, dass** die Dichtung (15, 16) in einer umlaufenden Nut des Geberkolbens (7, 7', 7", 7"') angeordnet ist.

8. Ansteuerung nach Anspruch 6, **dadurch gekennzeichnet, dass** die Dichtung (40) in einer umlaufenden Nut der Zylinderinnenwandung (17"") angeordnet ist.

9. Verfahren zur Ansteuerung einer Kupplung, insbesondere für einen Hybridantrieb, bei dem zur Betätigung eines Arbeitskolbens in einem einer Kupplung zugeordneten Nehmerzylinder (5) ein Nehmerölraum (8, 8', 8") eines Geberzylinders (6, 6', 6", 6"', 6"") über ein Ventil (18), das den Nehmerölraum (8, 8', 8") mit einer Druckleitung (26) eines Ölreservoirs (24) verbindet, mit Öl gefüllt wird, wobei das Öl durch Verschieben eines Geberkolbens (7, 7', 7", 7"', 7"") aus einem Geberölraum (9, 9', 9", 9"', 9"") des Geberzylinders (6, 6', 6", 6"', 6"") über eine Arbeitsleitung (33) in einen Ölraum (23) des Nehmerzylinders (5) gedrückt wird und den Arbeitskolben in seiner Betätigungsstellung verschiebt, wobei zur Rückstellung des Arbeitskolbens der Nehmerölraum (8, 8', 8") des Geberzylinders (6, 6', 6", 6"', 6"") durch das Ventil (18) von der Druckleitung (26) getrennt und mit einer Tankleitung (23) verbunden und entleert wird, wobei in der Ausgangsstellung des Geberkolbens (7, 7', 7", 7"', 7"") der Geberölraum (9, 9', 9", 9"', 9"") über einen Ausgleichsbehälter (12) entlüftet und fehlendes Ölvolumen ausgeglichen wird, **dadurch gekennzeichnet,**
**dass** der Nehmerölraum (8, 8', 8") zum Entleeren über das Ventil (18) mit dem Ausgleichsbehälter (12) verbunden und dieser aufgefüllt wird, wobei überflüssiges Öl über einen Überlauf (21) des Ausgleichsbehälters (12) über die mit dem Überlauf (21) verbundene Tankleitung (23) dem Ölreservoir (24) wieder zugeführt wird.

10. Verfahren nach Anspruch 9, **dadurch gekennzeichnet, dass** bei einer vollständig leeren Kupplungsbetätigungsstrecke zur vollständigen Auffüllung von Geberölraum (9, 9', 9", 9"', 9"") und Ausgleichsbehälter (12) der Geberzylinder (6, 6', 6", 6"', 6"") mehrmals betätigt wird.

## Claims

1. Actuation means for a clutch, in particular for a hybrid drive, having a master cylinder (6, 6', 6", 6"', 6"") whose interior space is divided by a master piston (7, 7', 7", 7"', 7"") into a slave oil chamber (8, 8") and a master oil chamber (9, 9"', 9""), with the slave oil chamber (8, 8") being connected by means of a valve (18) to a tank line (23) to an oil reservoir (24) in a first valve position and to a pressure line (26) from the oil reservoir (24) in a second valve position, and with the master oil chamber (9, 9', 9", 9"', 9"") being connected via a working line (33) to the oil chamber (32) of a slave cylinder (5) and via a compensating line (11), as a function of the position of the master piston (7, 7', 7", 7"', 7""), to a compensating tank (12),
**characterized**
**in that** the valve (18), in its first position, connects the slave oil chamber (8, 8") via a return line (19) to the compensating tank (12) and
**in that** the compensating tank (12) has a compensating volume (20) which, at its highest point, has an overflow (21) which is connected to the tank line (23).

2. Actuation means according to in Claim 1, **characterized in that** the master cylinder (6, 6', 6", 6"', 6""), the compensating tank (12) and the valve (18) are arranged in a housing and form an actuation unit (2).

3. Actuation means according to in Claim 2, **characterized in that** the actuation unit (2) has an external working connection (31) for connecting to the slave cylinder (5), an external tank connection (22) and an external pressure connection (27) for connecting to the oil reservoir (24), and a valve control connection (29) for connecting a control unit (4) to a valve actuation means (28) of the valve (18).

4. Actuation means according to in one of Claims 1 to 3, **characterized in that**, when an equal pressure level prevails on both sides of the master cylinder (6, 6"', 6""), the master piston (7, 7"', 7"") has equal-sized hydraulically acting piston surfaces (34, 35, 36) pointing toward the slave oil chamber (8) and toward the master oil chamber (9 9"', 9"").

5. Actuation means according to in one of Claims 1 to 3, **characterized in that** the master piston (7', 7") has different-sized hydraulically acting piston surfaces (34', 34") pointing toward the slave oil chamber (8', 8") and toward the master oil chamber (9' 9").

6. Actuation means according to in one of Claims 1 to 5, **characterized in that**, between the master piston (7, 7', 7", 7"', 7"") and master cylinder (6, 6', 6", 6"', 6""), a seal (15, 16, 40) is arranged in an annular groove (13, 14, 39) in such a way that, in an end position of the master piston (7, 7', 7", 7"', 7"") when the slave oil chamber (8, 8', 8") is empty, the opening of the compensating line (11) to the master oil chamber (9, 9', 9", 9"', 9"") is exposed, with a passage which connects the master oil chamber (9, 9', 9", 9"', 9"") to the opening of the compensating line (11) being formed in a region, which is situated upstream of the seal (15, 16, 40) in the direction of the master oil chamber (9, 9', 9", 9"', 9""), between the piston circumference and the adjacent cylinder inner wall (17).

7. Actuation means according to in Claim 6, **characterized in that** the seal (15, 16) is arranged in an encircling groove of the master piston (7, 7', 7", 7"').

8. Actuation means according to in Claim 6, **characterized in that** the seal (40) is arranged in an encircling groove of the cylinder wall (17"").

9. Method for actuating a clutch, in particular for a hybrid drive, in which method, to activate a working piston in a slave cylinder (5) which is assigned to a clutch, a slave oil chamber (8, 8', 8") of a master cylinder (6, 6', 6", 6"', 6"") is filled with oil via a valve (18) which connects the slave oil chamber (8, 8', 8") to a pressure line (26) of an oil reservoir (24), with the oil being pressed from a master oil chamber (9, 9', 9", 9"', 9"") of the master cylinder (6, 6', 6", 6"', 6"") via a working line (33) into an oil chamber (23) of the slave cylinder (5), and moving the working piston into its activating position, as a result of a movement of a master piston (7, 7', 7", 7"', 7""), wherein in order to restore the working piston, the slave oil chamber (8, 8', 8") of the master cylinder (6, 6', 6", 6"', 6"") is separated from the pressure line (26) and connected to a tank line (23) by means of the valve (18) and is emptied, wherein in the initial position of the master piston (7, 7', 7", 7"', 7""), the master oil chamber (9, 9', 9", 9"', 9"") is ventilated via a compensating tank (12) and a lack of oil volume is compensated,
**characterized**
**in that** the slave oil chamber (8, 8', 8"), in order to be emptied, is connected by means of the valve (18) to the compensating tank (12) and the latter is filled, with excess oil being supplied back to the oil reservoir (24) via an overflow (21) of the compensating tank (12) via the tank line (23) which is connected to the overflow (21).

10. Method according to in Claim 9, **characterized in that**, in the event of the clutch activation path being completely empty, the master cylinder (6, 6', 6", 6"', 6"") is actuated repeatedly in order to completely fill the master oil chamber (9, 9', 9", 9"', 9"") and compensating tank (12).

## Revendications

1. Commande d'un embrayage, notamment pour un entraînement hybride, comprenant un maître-cylindre (6, 6', 6", 6"', 6""), dont l'espace intérieur est divisé par un maître-piston (7, 7', 7", 7"', 7"") en un espace d'huile récepteur (8, 8") et un espace d'huile émetteur (9, 9"', 9""), l'espace d'huile récepteur (8, 8") étant connecté par le biais d'une soupape (18) dans une première position de soupape à une conduite de réservoir (23) allant à un réservoir d'huile (24) et dans une deuxième position de soupape à une conduite de pression (26) partant du réservoir d'huile (24), et l'espace d'huile émetteur (9, 9', 9", 9"', 9"") étant connecté par le biais d'une conduite de travail (33) à l'espace d'huile (32) d'un cylindre récepteur (5) et par le biais d'une conduite de compensation (11) en fonction de la position du maître-piston (7, 7', 7", 7"', 7"") à un récipient de compensation (12),
**caractérisée en ce que**
la soupape (18), dans sa première position, connecte l'espace d'huile récepteur (8, 8") par le biais d'une conduite de retour (19) au récipient de compensation (12) et
**en ce que** le récipient de compensation (12) présente un volume de compensation (20) qui présente en son point le plus haut un trop-plein (21) qui est connecté à la conduite de réservoir (23).

2. Commande selon la revendication 1, **caractérisée en ce que** le maître-cylindre (6, 6', 6", 6"', 6""), le récipient de compensation (12) et la soupape (18) sont disposés dans un boîtier et forment une unité de commande (2).

3. Commande selon la revendication 2, **caractérisée en ce que** l'unité de commande (2) présente, pour la connexion au cylindre récepteur (5), un raccord de travail externe (31), pour la connexion au réservoir d'huile (24), un raccord de réservoir externe (22) et un raccord de pression externe (27) et pour la connexion d'un appareil de commande (4) à une commande de soupape (28) de la soupape (18), un raccord de commande de soupape (29).

4. Commande selon l'une quelconque des revendications 1 à 3, **caractérisée en ce que** pour un niveau de pression identique des deux côtés du maître-cylindre (6, 6"', 6""), le maître-piston (7, 7"', 7"") présente, vers l'espace d'huile récepteur (8) et vers l'espace d'huile émetteur (9, 9"', 9""), des surfaces de piston à action hydraulique (34, 35, 36) de même taille.

5. Commande selon l'une quelconque des revendications 1 à 3, **caractérisée en ce que** le maître-piston (7', 7") présente, vers l'espace d'huile récepteur (8', 8") et vers l'espace d'huile émetteur (9', 9"), des surfaces de piston à action hydraulique (34', 34") de tailles différentes.

6. Commande selon l'une quelconque des revendications 1 à 5, **caractérisée en ce qu'**entre le maître-piston (7, 7', 7", 7"', 7"") et le maître-cylindre (6, 6', 6", 6"', 6"") est disposée une garniture d'étanchéité (15, 16, 40) dans une rainure annulaire (13, 14, 39), de telle sorte que dans une position d'extrémité du maître-piston (7, 7', 7", 7"', 7""), lorsque l'espace d'huile récepteur (8, 8', 8") est vide, l'ouverture de la conduite de compensation (11) vers l'espace d'huile émetteur (9, 9', 9", 9"', 9"") est libérée, et dans une région située en amont de la garniture d'étanchéité (15, 16, 40) vers l'espace d'huile émetteur (9, 9', 9", 9"', 9""), entre la périphérie du piston et la paroi interne adjacente du cylindre (17), étant formé un passage reliant l'espace d'huile émetteur (9, 9', 9", 9"', 9"") à l'ouverture de la conduite de compensation (11).

7. Commande selon la revendication 6, **caractérisée en ce que** la garniture d'étanchéité (15, 16) est disposée dans une rainure périphérique du maître-piston (7, 7', 7", 7"').

8. Commande selon la revendication 6, **caractérisée en ce que** la garniture d'étanchéité (40) est disposée dans une rainure périphérique de la paroi interne du cylindre (17"").

9. Procédé pour la commande d'un embrayage, notamment pour un entraînement hybride, dans lequel, pour l'actionnement d'un piston de travail dans un cylindre récepteur (5) associé à un embrayage, un espace d'huile récepteur (8, 8', 8") d'un maître-cylindre (6, 6', 6", 6"', 6"") est rempli d'huile par le biais d'une soupape (18) qui raccorde l'espace d'huile récepteur (8, 8', 8") à une conduite de pression (26) d'un réservoir d'huile (24), l'huile étant refoulée par déplacement d'un maître-piston (7, 7', 7", 7"', 7"") hors d'un espace d'huile émetteur (9, 9', 9", 9"', 9"") du maître-cylindre (6, 6', 6", 6"', 6"") par le biais d'une conduite de travail (33) dans un espace d'huile (23) du cylindre récepteur (5), et déplaçant le piston de travail dans sa position d'actionnement, et pour le rappel du piston de travail, l'espace d'huile récepteur (8, 8', 8") du maître-cylindre (6, 6', 6", 6"', 6"") étant séparé par la soupape (18) de la conduite de pression (26) et étant raccordé à une conduite de réservoir (23) et étant vidé, et dans la position de départ du maître-piston (7, 7', 7", 7"', 7""), l'espace d'huile émetteur (9, 9', 9", 9"', 9"") étant désaéré par le biais d'un récipient de compensation (12) et le volume d'huile manquant étant compensé,
**caractérisé en ce que**
l'espace d'huile récepteur (8, 8', 8"), pour sa vidange, est raccordé par le biais de la soupape (18) au récipient de compensation (12) et ce dernier est rempli, l'huile en excès étant ramenée par le biais d'un trop-plein (21) du récipient de compensation (12) par le biais de la conduite de réservoir (23) connectée au trop-plein (21) au réservoir d'huile (24).

10. Procédé selon la revendication 9, **caractérisé en ce que** dans le cas d'une course d'actionnement d'embrayage complètement vide, pour le remplissage total de l'espace d'huile émetteur (9, 9', 9", 9"', 9"") et du récipient de compensation (12), le maître-cylindre (6, 6', 6", 6"', 6"") est actionné plusieurs fois.
